# EUROPEAN PATENT APPLICATION

(11) **EP 4 346 194 A1**
(43) Date of publication of application: **03.04.2024**
(21) Application number: 23825594.7
(22) Date of filing: 30.06.2023
(51) Int. Cl.: H04M 1/72484, H04M 1/72448, H04M 1/72463, H04M 1/57, G06F 21/62

(54) **VEHICLE, AND PROCESSING METHOD AND DEVICE FOR VEHICLE USER PRIVACY**

(30) Priority: 09.08.2022 CN 202210948150
(71) Applicant: Voyah Automobile Technology Company Ltd., Hanyang District Wuhan City, Hubei 430050 (CN)
(72) Inventor: LI, Qian, Wuhan, Hubei 430050 (CN); CHEN, Qing, Wuhan, Hubei 430050 (CN); ZHANG, Guihai, Wuhan, Hubei 430050 (CN); ZHU, Xukui, Wuhan, Hubei 430050 (CN); XIE, Wenyun, Wuhan, Hubei 430050 (CN); LIU, Chao, Wuhan, Hubei 430050 (CN); WANG, Qing, Wuhan, Hubei 430050 (CN); HUANG, Zhikai, Wuhan, Hubei 430050 (CN); BIAN, Aoming, Wuhan, Hubei 430050 (CN); HU, Liu, Wuhan, Hubei 430050 (CN)
(74) Representative: Sach, Greg Robert
(86) International application number: PCT/CN2023/105298
(87) International publication number: WO 2024/032268

(57) **Abstract**

The present application discloses a vehicle, a method and a device for processing a privacy of a vehicle user. The method for processing includes: receiving a first operational instruction input by a vehicle user; configuring an object set to belong to the privacy mode based on the first operational instruction in which each object label in the object set corresponds to one private data of the vehicle user; receiving a second operational instruction input by the vehicle user; and turning on the privacy mode based on the second operational instruction to hide the private data output by the in-Vehicle Infotainment of vehicle and corresponds to the object label in the object set.

## Description

### CROSS-REFERENCE TO RELATED APPLICATIONS

This application claims a priority of the Chinese patent application No. 202210948150.X filed on December 20, 2022, the entire content of which is incorporated herein by reference.

### TECHNICAL FIELD

The present invention belongs to the technical field of processing a privacy of a vehicle user, and in particular relates to a vehicle, a method and device for processing the privacy of the vehicle user.

### BACKGROUND

As main daily tools for transportation, cars are increasingly closely related to lives of people. However, with the increase in human-computer interaction information on cars, the protective measures for the privacy of the vehicle user cannot meet the growing personalized needs of vehicle use. For example, when the vehicle user answers an incoming call through an In-Vehicle Infotainment of vehicle, multiple cumbersome operations are required to hide a phone number. The privacy of the vehicle user is possibly leaked during these cumbersome operations due to relatively cumbersome operational process.

Therefore, how to improve a reliability of processing of the privacy of the vehicle user is an urgent technical issue that needs to be solved.

### SUMMARY

The present invention provides a vehicle, a method and device for processing a privacy of a vehicle user to improve a reliability of processing for the privacy of the vehicle user.

According to a first aspect of the present invention, a method for processing a privacy of a vehicle user is provided. The method includes: receiving a first operational instruction input by a vehicle user; configuring an object set to belong to the privacy mode based on the first operational instruction, in which each object label in the object set corresponds to one private data of the vehicle user; receiving a second operational instruction input by the vehicle user; and turning on the privacy mode based on the second operational instruction to hide the private data output by the in-Vehicle Infotainment of vehicle and corresponds to the object label in the object set.

According to a second aspect of the present invention, a vehicle is provided, which processes the private data of the vehicle user through the above method for processing the privacy of the vehicle user.

According to a third aspect of the present invention, a device for processing the privacy of the vehicle user is provided. The device includes: a first receiving module, configured to receive a first operational instruction input by a vehicle user; a first configuration module, configured to configure an object set to belong to a privacy mode based on the first operational instruction, wherein each object label in the object set corresponds to one private data of the vehicle user; a second receiving module, configured to receive a second operational instruction input by the vehicle user; and a turning on module, configured to turn on the privacy mode based on the second operational instruction to hide the private data which is output by the in-Vehicle Infotainment of vehicle and corresponds to the object label in the object set.

According to a fourth aspect of the present invention, a computer-readable storage medium is provided, the computer-readable storage medium stores computer instructions, and the computer program instructions, when executed by a processor, cause a processor to implement the above-described method for processing the privacy of the vehicle user.

### BRIEF DESCRIPTION OF DRAWINGS

In order to more clearly explain embodiments of this specification or the technical solutions in the prior art, the accompanying drawings needed to be used in the embodiments will be briefly introduced below. Obviously, the accompanying drawings in the following description are only some embodiments in this specification, and for those of ordinary skill in the art, other accompanying drawings can also be obtained based on these accompanying drawings without creative efforts.
FIG. 1 shows a flowchart of a method for processing a privacy of a vehicle user according to some embodiments of the present invention.
FIG. 2 shows a systematic interaction diagram of the method for processing the privacy of the vehicle user according to some embodiments of the present invention.
FIG. 3 shows a schematic structural diagram of a device for processing a privacy of a vehicle user according to some embodiments of the present invention.

### DESCRIPTION OF EMBODIMENTS

The technical solutions in the embodiments of the present invention will be clearly and completely described below with reference to the accompanying drawings in the embodiments of the present invention. Obviously, the described embodiments are only some embodiments of the present invention, rather than all embodiments. All other embodiments obtained by those skilled in the art based on the embodiments of the present invention shall fall within the scope of protection sought for by the present invention.

In the current privacy protection strategy for a vehicle user, a privacy of the vehicle user has been usually protected in advance before the vehicle user performs independent operations on each Application (APP). Taking answering a private call as an example, it is required that a contact corresponding to the private call is set as a private contact in advance, and when an incoming call request is received, the incoming call is answered according to the privacy protection strategy. If the private contact is not set in advance, there is a risk of privacy exposure in the process of answering. Therefore, based on the current privacy protection strategy, it is needed to improve a reliability of privacy protection of the vehicle user. The following embodiments in the present invention will explain how to implement a method for processing the privacy of the vehicle user to improve the reliability of privacy protection of the vehicle user.

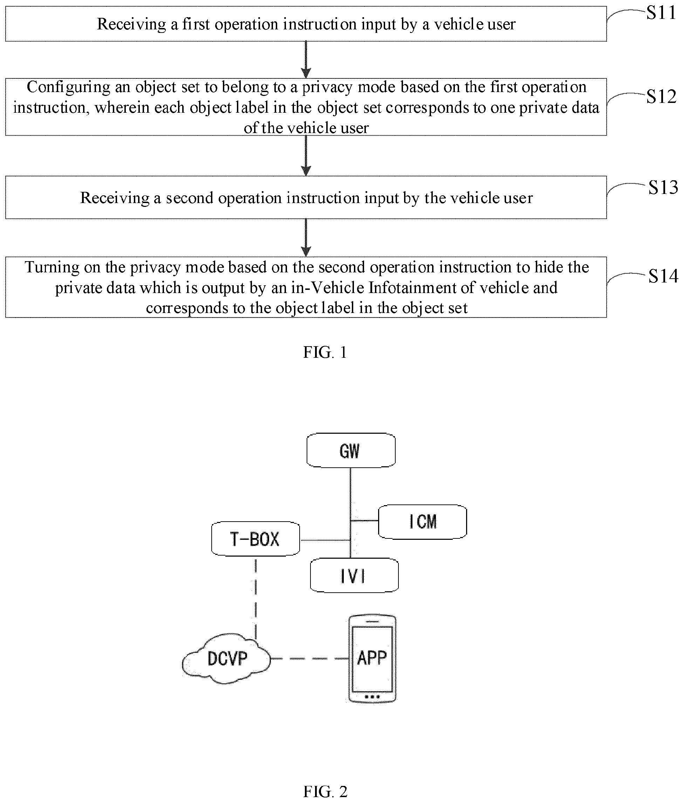

Referring to FIG 1, which shows a flowchart of a method for processing a privacy of a vehicle user according to some embodiments of the present invention, the method may include step S11 to step S14.

In step S11, a first operational instruction input by the vehicle user is received.

In some embodiments, the vehicle user can input the first operational instruction through a button or a touch screen, and a subject receiving the first operational instruction may be an In-Vehicle Infotainment or other apparatuses interconnected with the In-Vehicle Infotainment. For example, in new energy vehicles, due to an existence of a vehicle telematics box (T-BOX, which is a remote communication box), the In-Vehicle Infotainment can be remotely interconnected with a mobile terminal of the vehicle user through the vehicle T-BOX. Therefore, the first operational instruction input by the vehicle user can also be received by the mobile terminal interconnected with the In-Vehicle Infotainment. The mobile terminal may be a smart watch, a smart phone, or other smart wearable apparatuses of the vehicle user. After the first operational instruction input by the vehicle user is received, proceed to step S12.

In step S12, an object set is configured to belong to a privacy mode based on the first operational instruction, wherein each object label in the object set corresponds to one private data of the vehicle user.

In some embodiments, the object set includes at least one object label that needs to be hidden, and each object label corresponds to one private data of the vehicle user. The object label characterizes a proprietary information that points to a corresponding private data. The proprietary information may be a data name of the private data, or a proprietary character or icon pointing to the private data. Taking a phone of the vehicle user and a schedule of the vehicle user as the object labels to be hidden is taken as an example, and the phone of the vehicle user and the schedule of the vehicle user are configured to the object set. The private data corresponding to the phone of the vehicle user is an incoming call data of the vehicle user, and the incoming call data is used to characterize an information displayed when the vehicle user receives an incoming call, such as a caller number or a caller name. The private data corresponding to the schedule of the vehicle user is a scheduling data of the vehicle user, and the scheduling data is used to characterize a schedule time and a location information of the vehicle user. The object label corresponding to the private data can be configured to the object set through the first operational instruction.

In some embodiments, the configuring the object set to belong to the privacy mode based on the first operational instruction may include the following steps: adding or deleting the object label corresponding to the private data into or from the object set according to the first operational instruction. The private data includes one or more of an incoming call data, a call record data, a user schedule data and a navigation trace data.

During an implementation process, the object labels of the incoming call data, the call record data, the user schedule data and the navigation trace data may be correspondingly set as an incoming call, a call record, a user schedule and a navigation trace. Adding or deleting the object labels into or from the object set according to an actual input of the vehicle user may be implemented by configuring a sliding button, and adding the object labels to the object set through the sliding button; or may be implemented by configuring a checkbox, and adding the object labels to the object set through the checkbox; or alternatively may be implemented by configuring other operational manners, as long as the object labels can be added into or deleted from the object set. The call record data may characterize a call time, an incoming call number, an outgoing call number, and so on of the vehicle user, and the navigation trace data may characterize a traveling track data of vehicle by navigating. After the object set is configured to belong to the privacy mode based on the first operational instruction, proceed to step S13.

In step S13, a second operational instruction input by the vehicle user is received.

In some embodiments, the vehicle user can input a second operational instruction through buttons or a touch screen. The second operational instruction may be received by the In-Vehicle Infotainment of vehicle, and of course, the second operational instruction can also be received by other terminal apparatuses interconnected with the In-Vehicle Infotainment and then forwarded to the In-Vehicle Infotainment. In the present invention the way of implementing the receiving of the second operational instruction is not limited, as long as the second operational instruction input by the vehicle user can be received, and no more details will be described here.

In practical applications, the privacy protection of the vehicle users needs to be dealt in real time. However, due to the large number of personalized configurations of the vehicle, the user needs to perform multiple operations to turn on the privacy mode and there may be a risk of privacy leakage during the operations.

In some embodiments, before the second operational instruction input by the vehicle user is received, the following step may also be included: configuring a trigger port of the second operational instruction to be displayed on a preset interface of a vehicle display terminal.

It is understood that an information output by the vehicle can be displayed through the touch screen of the In-Vehicle Infotainment. In order to improve convenience and immediacy of operation, the preset interface may be provided as a HiBoard, and the trigger port can be added to the HiBoard in the form of a touch button. Of course, the trigger port may also be configured in other preset interfaces, as long as the preset interface can facilitate the vehicle user to input the second operational instruction. After the second operational instruction input by the vehicle user is received, proceed to step S14.

In step S14, the privacy mode is turned on based on the second operational instruction to hide the private data which is output by the in-Vehicle Infotainment of vehicle and corresponds to the object label in the object set.

In some embodiments, after the privacy mode is turned on, the private data which is output by the In-Vehicle Infotainment of vehicle (or referred as In-Vehicle Infotainment) and corresponds to the object label in the object set will be hidden. A way of hiding may be a direct hiding without displaying. For example, the private data corresponding to the object label in the object set is filtered out from the data output by the In-Vehicle Infotainment of vehicle, to obtain a data to be displayed, and the data to be displayed is sent to the display terminal of vehicle for display. The display terminal can be touch screens (or central control screens), speakers and so on of the In-Vehicle Infotainment. The display terminal can convert the private data into a preset character for display. For example, after an incoming call information for the vehicle user is received, the caller number of the incoming call information is converted into asterisks for display, or converted into other characters that cannot characterize the private data.

It is understandable that with a continuous development of vehicle functions, a personalized configuration of vehicles becomes more abundant. For example, in the new energy vehicles, they can be equipped with cameras, human body recognition apparatuses and other interactive terminals based on the vehicle T-BOX. If these apparatuses or terminals are turned on, the privacy of the vehicle user may be exposed through collection by related apparatuses or terminals.

Based on this, in some embodiments, before receiving the second operational instruction input by the vehicle user, the following steps may also be included: receiving a third operational instruction of the vehicle user, and generating a disabling instruction for an on-board terminal based on the third operational instruction, wherein the disabling instruction is configured to configure the on-board terminal as a disabled state when the privacy mode is turned on.

During the implementation process, the third operational instruction can be input by the vehicle user through the buttons or the touch screens, and a subject receiving the third operational instruction may be the In-Vehicle Infotainment or other apparatuses interconnected with the In-Vehicle Infotainment. When the privacy mode is turned on, the on-board terminal can be configured as a disabled state through a disabling instruction generated based on the third operational instruction. The on-board terminals may be the cameras, microphones, the speakers, the human body recognition apparatuses and other interactive terminals on the vehicle. When the camera is disabled, a camera function of a Driver Monitor System (DMS) and a recording function of a Digital Video Recorder (DVR) in the vehicle are disabled. When an in-vehicle microphone is disabled, a voice recognition function of the In-Vehicle Infotainment (IVI) and a recording function of the DVR are disabled. When the in-vehicle microphone is disabled, the IVI can turn off the microphone used for voice recognition on the IVI through an internal signal, and at the same time turn off a microphone of the DVR through an added Controller Area Network (CAN) signal.

In some embodiments, after configuring the on-board terminal as a disabled state, the following step may also be included: sending an alarm information to the mobile terminal when the on-board terminal is manipulated by the vehicle user via the mobile terminal.

It is understandable that some on-board terminals, such as cameras installed on vehicles, can be manipulated by the mobile terminals to complete corresponding tasks. FIG. 2 shows a systematic interaction diagram of the method for processing the privacy of the vehicle user according to some embodiments of the present invention. Referring to FIG. 2, the system may include a T-BOX, an Image Camera Module (ICM) module, a GateWay (GW), the IVI, DCVP (or referred as Cloud Server) and mobile phone terminals. The ICM module is interconnected and communicated with the T-BOX with the assistance of the GW and the IVI. Taking pictures through a mobile phone terminal is taken as an example. A picture-taking instruction is sent by the vehicle user via an APP of the mobile phone terminal. After the picture-taking instruction is received by the T-BOX through the DCVP, the T-BOX sends the picture-taking instruction to the ICM through the GW and the IVI. The ICM, upon receiving the picture-taking instruction, takes a picture and transmits it to the DCVP via the T-BOX through the GW and the IVI. Then the DCVP sends the picture to the APP on the mobile phone terminal, and the picture can be viewed by the vehicle user on the mobile phone terminal through the APP. After in privacy mode,, because the ICM is configured as the disabled state, the ICM cannot be manipulated by the vehicle user through the mobile phone terminal when the privacy mode is not turned off. In order to let the vehicle user know the manipulating response of the ICM timely, when the vehicle user manipulates the on-board terminal via a mobile terminal, the In-Vehicle Infotainment sends the alarm information to the mobile terminal. The alarm information can be notified to the vehicle user by outputting a pop-up window or outputting a vibration signal. For example, when the vehicle user, through an APP, chooses a Remote in-car photography, a relevant option button is processed to be in grayscale, and "Privacy mode is turned on, and pictures cannot be taken!" is prompted in the pop-up window.

In practical applications, since the private data is hidden after the privacy mode is turned on, a purpose of privacy protection is achieved. However, it may cause the vehicle user to be unable to discover the incoming call information in time, thereby causing the vehicle user to be unable to communicate with the caller number in time.

Based on this, in some embodiments, after the privacy mode is turned on based on the second operational instruction, the following steps may also be included: determining whether an incoming call information is received by the mobile terminal interconnected with the In-Vehicle Infotainment of vehicle; and in the case that the incoming call information is received, configuring the incoming call information as the mobile terminal for answering.

It is understandable that when the incoming call information is received by the mobile terminal, it is indicated that other users are calling the vehicle user. In the privacy mode, it cannot be answered through the speakers and microphones of the In-Vehicle Infotainment, instead the incoming call information is configured as the mobile terminal for answering. The mobile terminal may be a Bluetooth headset, a bone transmission headset, a mobile phone terminal and so on. The mobile terminal uses a loudspeaker to output sound information, thereby preventing a leaking of the privacy of the vehicle user.

In some embodiments, after the privacy mode is turned on based on the second operational instruction, the following steps may also be included: processing the private data as a corresponding hidden label; and outputting the hidden label at a preset period through the in-Vehicle Infotainment of vehicle.

It can be understood that the hidden label characterizes an output form of the private data after processed, such as a name or icon corresponding to the private data. After the privacy mode is turned on, in order to let the vehicle user know that the privacy mode has been turned on and the private data is hidden, the private data is processed as the corresponding hidden label. For example, a preset field of the incoming call number is converted into multiple asterisks. For an incoming mobile phone number, the conventional display method is to directly display 11 digits of Arabic numerals and the corresponding stored name of the owner. After in privacy mode, 4th-7th digits of the incoming mobile phone number are processed as asterisks to be used as an hidden label The hidden label is periodically refreshed on the touch screen of the In-Vehicle Infotainment and the name of the caller is not displayed. The preset period may be set freely according to the actual situation, such as 1 second. For another example, after the user schedule data is hidden, the hidden label is a schedule icon of the user schedule, and only the schedule icon is displayed on a user interface (UI) of the touch screen. The user schedule data can be viewed after the vehicle user clicks the schedule icon or related button for display. After the privacy mode is turned on, there may be multiple hidden private data. The corresponding hidden label can be sorted and output in a cyclic manner at a preset period, so that the vehicle user can know the hidden private data in a timely manner.

In practical applications, the object set can be configured by the vehicle user according to actual needs, and multiple private data may be involved during the configuration of the object set. If a configured object label is not stored, the configured object label will be lost after the In-Vehicle Infotainment is powered off, resulting in that the object set needs to be reconfigured when in the privacy mode again.

Based on this, in some embodiments, after the object set is configured to belong to the privacy mode based on the first operational instruction, the following step may also be included: storing the configured object set to the in-Vehicle Infotainment of vehicle, so that the private data corresponding to the object label in the object set can be hidden based on the second operational instruction when the in-Vehicle Infotainment of vehicle is re-powered.

During the implementation process, a save button may be provided for the object set configured in the In-Vehicle Infotainment. After the vehicle user clicks the save button, the object set is configured to be stored in a corresponding storage sector. When the In-Vehicle Infotainment is powered on again, if the second operational instruction input by the vehicle user is received, the object set in the storage sector is read, and the private data corresponding to the object label in the object set is hidden. The save button on the In-Vehicle Infotainment is configured to be as a turned-on state by default when the In-Vehicle Infotainment is powered on again.

Based on the same concept as disclosed in the method for processing, some embodiments of the present invention also provide a vehicle, which processes a private data of a vehicle user through the above method for processing the privacy of the vehicle user.

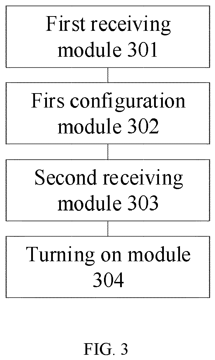

Based on the same concept as disclosed in the method for processing, some embodiments of the present invention also provide a device for processing a privacy of a vehicle user. FIG. 3 shows a schematic structural diagram of a device for processing a privacy of a vehicle user according to some embodiments of the present invention. Referring to FIG. 3. The device includes: a first receiving module 301, configured to receive a first operational instruction input by a vehicle user; a first configuration module 302, configured to configure an object set to belong to a privacy mode based on the first operational instruction, in which each object label in the object set corresponds to one private data of the vehicle user; a second receiving module 303, configured to receive a second operational instruction input by the vehicle user; and a turning on module 304, configured to turn on the privacy mode based on the second operational instruction to hide the private data output by the in-Vehicle Infotainment of vehicle and corresponds to the object label in the object set.

In some embodiments, the first configuration module 302 includes: a modification submodule, configured to add or delete the object labels corresponding to the private data into or from the object set according to the first operational instruction, in which the private data includes one or more of an incoming call data, a call record data, a user schedule data and a navigation trace data.

In some embodiments, the device further includes: a third receiving module (not shown), configured to receive a third operational instruction of the vehicle user, and generate a disabling instruction for an on-board terminal based on the third operational instruction, in which, the disabling instruction is configured to configure the on-board terminal as a disabled state when the privacy mode is turned on.

In some embodiments, the device further includes: a sending module (not shown), configured to send an alarm information to a mobile terminal when the on-board terminal is manipulated by the vehicle user via the mobile terminal.

In some embodiments, the device further includes: a second configuration module (not shown), configured to configure a trigger port of the second operational instruction to be displayed on a preset interface of a vehicle display terminal.

In some embodiments, the device further includes: a judging module (not shown), configured to judge whether an incoming call information is received by a mobile terminal interconnected with the in-Vehicle Infotainment of vehicle; and a third configuration module (not shown), configured to configure the incoming call information as the mobile terminal for answering when the incoming call information is received by the mobile terminal interconnected with the In-Vehicle Infotainment of vehicle.

In some embodiments, the device further includes: a processing module (not shown), configured to process the private data as corresponding hidden label; and an output module (not shown), configured to output the hidden label at a preset period through the in-Vehicle Infotainment of vehicle.

In some embodiments, the device further includes: a storage module (not shown), configured to store the object set configured to the in-Vehicle Infotainment of vehicle, so that the private data corresponding to the object label in the object set is hidden based on the second operational instruction when the in-Vehicle Infotainment of vehicle is re-powered.

Based on the same concept as disclosed in the method for processing, some embodiments of the present invention also provide an apparatus for processing the privacy of the vehicle user. The apparatus for processing the privacy of the vehicle user includes a processor and a memory, and a computer program code is stored on the memory. The computer program code, when executed by the processor, causes the processor to perform the method for processing the privacy of the vehicle user according to one or more embodiments of the present invention.

Based on the same concept as disclosed in the method for processing, some embodiments of the present invention also provide a computer-readable storage medium. The computer-readable storage medium stores computer instructions. The computer instructions are used to cause the computer to execute the above-mentioned method for processing the privacy of the vehicle user.

The technical solution provided in the embodiments of the present invention has at least the following technical effects or advantages: by means of the method for processing the privacy of the vehicle user according to some embodiments of the present invention, the first operational instruction input by the vehicle user is received, the object set is configured to belong to the privacy mode based on the first operational instruction, each object label in the object set corresponds to one private data of the vehicle user, the second operational instruction input by the vehicle user is received, and the privacy mode is turned on based on the second operational instruction, because the object labels corresponding to the private data that needs to be hidden are all configured into the object set, when the privacy mode is turned on, the private data output by the In-Vehicle Infotainment of vehicle and corresponds to the object labels in the object set can be hidden, and a purpose of one-click to protect the privacy is achieved. The vehicle user can perform a processing of the privacy conveniently and quickly, without the need for other tedious operations, and therefore the risk of accidental leakage in private data processing is reduced, thereby improving the reliability of processing of the privacy of the vehicle user.

Those skilled in the art will appreciate that embodiments of the present invention may be provided as methods, systems, or computer program products. Accordingly, the present invention may take the form of an entirely hardware embodiment, an entirely software embodiment, or an embodiment that combines software and hardware aspects. Furthermore, the present invention may take the form of a computer program product embodied on one or more computer-usable storage media (including, but not limited to, disk storage, CD-ROM, optical storage, etc.) having a computer-usable program code embodied therein.

The present invention is described with reference to flowcharts and/or block diagrams of methods, apparatuses (modules, systems), and computer program products according to embodiments of the disclosure. It will be understood that each process and/or block in the flowcharts and/or block diagrams, and combinations of processes and/or blocks in the flowchart and/or block diagrams, can be implemented by computer program instructions. These computer program instructions may be provided to a processor of a general purpose computer, special purpose computer, embedded computer, or other programmable data processing apparatus to produce a device, such that the device produced by the instructions executed by a processor of the computer or other programmable data processing apparatus can implement the functions specified in a process or processes in the flowcharts and/or in a block or blocks in the block diagrams.

These computer program instructions may also be stored in a computer-readable memory that causes a computer or other programmable data processing apparatus to operate in a particular manner, such that the instructions stored in the computer-readable memory produce an article of manufacture including the instruction device, the instruction device implements the functions specified in a process or processes in the flowchart and/or a block or blocks in the block diagram.

These computer program instructions may also be loaded onto a computer or other programmable data processing apparatus, causing a series of operating steps to be performed on the computer or other programmable apparatus to produce computer-implemented processing, and therefore instructions executed on the computer or other programmable apparatus provide steps for implementing the functions specified in a process or processes in a flowchart and/or a block or blocks in a block diagram.

Although the embodiments of the present invention have been described, those skilled in the art can make changes and modifications to these embodiments once the basic inventive concept is understood. Therefore, it is intended that the appended claims be construed to include the above-described embodiments and all changes and modifications that fall within the scope of the present invention.

Obviously, those skilled in the art can make various changes and modifications to the present invention without departing from the spirit and scope of the disclosure. In this way, if these modifications and variations of the present invention fall within the scope of the claims of the present invention and equivalent technologies thereof, the present invention is also intended to include these modifications and variations.

## Claims

1. A method for processing a privacy of a vehicle user, **characterized by** comprising:
receiving a first operational instruction input by the vehicle user;
configuring an object set to belong to a privacy mode based on the first operational instruction, wherein each object label in the object set corresponds to one private data of the vehicle user;
receiving a second operational instruction input by the vehicle user; and
turning on the privacy mode based on the second operational instruction to hide the private data which is output by an in-Vehicle Infotainment of vehicle and corresponds to the object label in the obj ect set.

2. The method for processing the privacy of the vehicle user according to claim 1, wherein the configuring the object set to belong to the privacy mode based on the first operational instruction comprises:
adding or deleting the object label corresponding to the private data into or from the object set according to the first operational instruction, wherein the private data comprises one or more of an incoming call data, a call record data, a user schedule data and a navigation trace data.

3. The method for processing the privacy of the vehicle user according to claim 1, wherein before the receiving the second operational instruction input by the vehicle user, the method further comprises:
receiving a third operational instruction of the vehicle user, and generating a disabling instruction for an on-board terminal based on the third operational instruction, wherein the disabling instruction is configured to configure an on-board terminal as a disabled state when the privacy mode is turned on.

4. The method for processing the privacy of the vehicle user according to claim 3, wherein after the on-board terminal is configured as the disabled state, the method further comprises:
sending an alarm information to a mobile terminal when the vehicle user manipulates the on-board terminal via the mobile terminal.

5. The method for processing the privacy of the vehicle user according to claim 1, wherein before the receiving the second operational instruction input by the vehicle user, the method further comprises:
configuring a trigger port for the second operational instruction to be displayed on a preset interface of a vehicle display terminal.

6. The method for processing the privacy of the vehicle user according to claim 1, wherein after the turning on the privacy mode based on the second operational instruction, the method further comprises:
determining whether an incoming call information is received by a mobile terminal interconnected with the In-Vehicle Infotainment of vehicle; and
configuring the incoming call information as the mobile terminal for answering under the circumstance that the incoming call information is received.

7. The method for processing the privacy of the vehicle user according to claim 1, wherein after the turning on the privacy mode based on the second operational instruction, the method further comprises:
processing the private data as a corresponding hidden label; and
outputting the hidden label at a preset period through the in-Vehicle Infotainment of vehicle.

8. The method for processing the privacy of the vehicle user according to claim 1, wherein after the configuring the object set to belong to the privacy mode based on the first operational instruction, the method further comprises:
storing the object set configured to the in-Vehicle Infotainment of vehicle, so that the private data corresponding to the object label in the object set is hidden based on the second operational instruction when the in-Vehicle Infotainment of vehicle is re-powered on.

9. A vehicle, **characterized in that** the vehicle processes the private data of the vehicle user through the method according to any one of claims 1-8.

10. A device for processing a privacy of a vehicle user, **characterized by** comprising:
a first receiving module, configured to receive a first operational instruction input by a vehicle user;
a first configuration module, configured to configure an object set to belong to a privacy mode based on the first operational instruction, wherein each object label in the object set corresponds to one private data of the vehicle user;
a second receiving module, configured to receive a second operational instruction input by the vehicle user; and
a turning on module, configured to turn on the privacy mode based on the second operational instruction to hide the private data which is output by the in-Vehicle Infotainment of vehicle and corresponds to the object label in the object set.

11. A computer-readable storage medium, **characterized in that**, the computer-readable storage medium stores computer instructions, which, when executed by a processor, are configured to cause the processor to implement the method for processing the privacy of the vehicle user according to any one of claims 1-8.
